**Europäisches Patentamt**

(19) **European Patent Office**

**Office européen des brevets**

(11) Publication number : **0 393 043 B1**

(12) # EUROPEAN PATENT SPECIFICATION

(45) Date of publication of patent specification :
**06.05.92 Bulletin 92/19**

(51) Int. Cl.⁵ : **C04B 7/153,** C04B 7/28,
C04B 5/06

(21) Application number : **88907529.7**

(22) Date of filing : **19.11.87**

(86) International application number :
**PCT/US87/03027**

(87) International publication number :
**WO 89/04815 01.06.89 Gazette 89/12**

(54) **METHODS OF MAKING CEMENTITIOUS COMPOSITIONS FROM WASTE PRODUCTS.**

(43) Date of publication of application :
**24.10.90 Bulletin 90/43**

(45) Publication of the grant of the patent :
**06.05.92 Bulletin 92/19**

(84) Designated Contracting States :
**AT BE CH DE FR GB IT LI LU NL SE**

(56) References cited :
DE-A- 2 931 733
DE-C- 393 135
US-A- 3 825 433
US-A- 4 715 896
US-A- 4 756 761
US-E- 29 783

(73) Proprietor : **NEWMONT MINING
CORPORATION
1 United Bank Center 1700 Lincoln Street
Denver, CO 80203 (US)**

(72) Inventor : **PHILIP, T., Peter
1 Silvermine Woods Seir Hill Road
Wilton, CT 06897 (US)**
Inventor : **HANNAFORD, Anthony, L.
8265 Nababeep (ZA)**
Inventor : **KONICK, Ernst
P.O. Box 164
6503 Kleinbrakrivier (ZA)**

(74) Representative : **Horner, Martin Grenville et al
Cruikshank & Fairweather 19 Royal Exchange
Square
Glasgow G1 3AE Scotland (GB)**

## Description

Technical Field

The invention relates to the use of various waste products in cementitious compositions, such as cemented mine backfill, or other stabilized earths. Such waste products may include non-ferrous slags, as well as fossil fuel combustion residues.

Background Art

By-products of metallurgical processes, such as slags which result from the smelting of both ferrous and non-ferrous ores, and combustion products of coal from fossil fuel powered generating stations, such as fly ash or clinker, all represent the product of a significant investment of energy which is normally lost upon the subsequent disposal of these materials, heretofore considered as waste.

The term 'slag' as used in this application refers to the vitreous mass which remains after the smelting of a metallic ore, a process which entails the reduction of the metallic constituents in the ore to a molten state.

The terms 'ferrous slag' or 'blast furnace slag' refer to that slag which remains after the smelting of iron ore. Alternatively, 'non-ferrous slag' is that slag which remains after the smelting of a non-ferrous ore such as copper, nickel, lead, or zinc, whether it be done in a blast furnace or otherwise. Therefore, a slag considered non-ferrous in the metallurgical sense may contain appreciable amounts of iron due to the presence of this compound as an impurity within the ore.

Fly ash is a combustion product resulting from the burning of coal which has been ground to a relatively fine particle size. Coal which is not as finely ground produces both fly ash and a coarse, incombustible residue known as clinker.

Many countries, including the United States, Canada, Chile, South Africa, Australia and the Scandinavian countries, produce or export a great deal of both ferrous and non-ferrous metals. This results in the production of significant quantities of slag, produced as a by-product of the required smelting operations. Blast furnace slags are currently used as additives in some low strength concretes whereas, except for railway ballast and granular fill type applications, the feasibility of potential utilizations of non-ferrous slags and fly ashes has been comparatively, disregarded, leading to the disposal of substantial quantities of these commodities with resulting large accumulations in areas surrounding the smelters and power stations.

The economic feasibility of sub-surface mining techniques depends upon an ability to fill the cavities created by the removal of the ore in order to establish and retain safe work,ing conditions. One accepted technique for performing this function involves the addition of Portland cement to the fill to act as a binder in creating a hardened cementitious composition.

The Portland cements used in this manner are specially formulated to primarily comprise specific compounds, such as tri-calcium silicates, di-calcium silicates and tri-calcium aluminates which, on hydration, provide the desired cementing or binding action. The principal constituents of these Portland cements, i.e. $CaO$ and $SiO_2$, are present in a high ratio of about 3 : 1 to strongly promote the calcium silicate reactions.

The difficulty and expense involved in transporting large quantities of Portland cement to often isolated mining locations has prompted a search for cheaper additives or substitutes which can reproduce the cementitious effect or Portland cement at a reduced cost. Thus, cemented fills introduce a broad new flexibility into mine planning and design however, cost considerations limit potential applications. Any means of reducing cemented fill costs for a given fill duty, therefore, broadens the potential application for the material.

In general, if a lower cost binder which allows the formation a slurry and with mine tailings and/or sand at the same viscosity as that of a Portland cement slurry and which develops adequate compressive strength in adequate times to prevent collapse was available, lower grade orebodies could be mined economically. Applicants invention servers just such a function.

The class of materials described under the broad term of 'pozzolans' offers potential cost savings in cemented fill practice. A pozzolan is any material which can provide silica to react with calcium hydroxide in the presence of water to form stable, insoluble cementitious hydrated calcium silicates, or related, more complex silicates. The silicates formed by pozzolanic action are closely related to some of those formed by the hydration of Portland cement.

Iron blast furnace slag, fly ash and various 'natural' slags and ashes have been known for some time to have pozzolanic properties. Waste industrial slags, however, do not contain the correct quantities of essential ingredients of Portland cements. Iron blast furnace slag comes closest with a $CaO/SiO_2$ ratio of approximately 1. To acquire, such pozzolanic properties, however, such slags must be cooled to an amorphous (or highly vitreous) state by rapid quenching such as by immersion in a large quantity of high pressure water. It is well known for example, that granulated blast-furnace slag obtained in the production of pig iron can be mixed with Portland cement clinker and the mixture finely ground to bring out the inherent hydraulic properties of the slag.

In most current applications wherein ferrous slag or fly ash is used in backfilling, one finds a combination of a snmall quantity of Portland cement providing some initial set and strength, together with the slag or fly ash. The slag or fly ash reacts with residual Ca0 from the cement reactions to form a 'high-grade' pozzolanic material having calcium silicates which provide the balance of the strength required over a period of time.

The properties of such ferrous slag-based pozzolanic materials have been set forth in great detail in various reference works well known by those working in the field,including, for example, Turriziani, R., "Aspects of the Chemistry of Pozzolanas", Chapter 14, The Chemistry of Cements, H.F.W. Taylor, Ed. Vol. 2, Academic Press, 1964; Nurse, R.W., "Slag Cements", Chapter 13, The Chemistry of Cements, H.F.W. Taylor, Ed., Vol. 2, Academic Press, 1964; Kramer, W., "Blast-Furnace Slags and Slag Cements", Paper VII-2, Fourth International Symposium on the Chemistry of Cement, Washington, D.C., pp. 957-981, 1960 and Biczok, I "Portland Blast-Furnace Cements (Slag Cement)", pp. 50-58, in Concrete Corrosion and Concrete Protection", Chemical Publishing Co., Inc., New York, N.Y. 1967.

Additionally, the general physical requirements for "acceptable" pozzolanic activity are set forth in the ASTM Standard Specification for "Blended Hydraulic Cements", no. C595. These requirements are reproduced below:

```
POZZOLAN


Fineness:        Amount retained when wet sieved on
                 45 um (No. 325) sieve, max. %          20.0


Pozzolanic
Activity
Test:            With lime (8.16), strength,
                 minimum psi, (MPa)                     800 (5.5)


                 or with portland cement, (8.17),
                 index, min. %                          75


SLAG


Slag
Activity
Test:            With lime (8.16), strength,
                 minimum psi (MPa)                      800 (5.5)


                 or with portland cement (8.19),
                 index, min. %                          75
```

A pozzolan would therefore have acceptable pozzolanic activity under these specifications if it meets either of the two alternative limits.

The chemical composition of the non-ferrous slags, however, is sufficiently different from that of the ferrous slags to require modification as described below in order to convert such non-ferrous slags from a 'low-grade pozzolan' to a 'high-grade pozzolan'. That is to say, that, to enable the use of non-ferrous slags as cement, their chemical composition must generally be modified to produce a product capable of competing with Portland cement, i.e., one capable of achieving high early strength as well as a high ultimate strength within an acceptable time frame.

Applicants have determined that a higher quality, less expensive cemented backfill may be produced, without the use of Portland cement, by adjusting the proportions of both Ca0 and $AL_2O_3$ in non-ferrous slag. This adjustment then converts the slag from a 'low-grade' pozzolan to a 'high-grade' pozzolan wherein the necessary aluminate reaction can be harnessed by adjusting the sulphate ion and calcium hydroxide concentration. Further, the methods for making cement from non-ferrous slag may also be extrapolated and used to prepare improved cements utilizing ferrous slags or fossil fuel combustion residues.

Summary of the Invention

The invention relates to a method for making cementitious compositions from a residue of waste industrial products such as non-ferrous slags, fossil fuel combustion residue or ferrous slags. This method includes the steps of grinding the vitreous waste residue whose composition may or may not have been altered by the addition of $CaO$ and/or $Al_2O_3$, to a predetermined particle size, and adding calcium hydroxide or $CaO$, and a compound containing a sulphate anion to form a mixture with water, which is then allowed to cure to the final cementitious compositions.

The $Ca(OH)_2$ or $CaO$ added after the waste residue has been ground is to raise the pH, in the presence of the water, to an alkaline value to activate the alumina component and provide a high early strength.

A preferred particle size is between about 2,500 and 5,000 Blaine, although larger or smaller particles will work in this invention. A preferred pH range is between about 10 and 14 and this range is achieved by the addition of an alkaline compound.

The curing of samples must be done under enclosed conditions at saturated humidity.

The application of heat during mixing and curing of samples greatly enhances the strength/time relationship. Temperature is thus a very important parameter in the successful application of the invention.

In these methods, a predetermined amount of Portland cement, aggregate, fillers, tailings, or other inert material can be added to the mixture prior to adding the water.

The compound containing $CaO$ or $Al_2O_3$ may be added to a furnace during the generation of the slag, or it may be added to said slag after the slag has been formed and before it is granulated. A preferred $CaO$ containing compound is lime for both composition modification and pH adjustment. A preferred $Al_2O_3$ containing compound is fly ash. Also, preferred compounds containing a sulphate anion include sodium sulphate or gypsum.

Finally, the invention relates to the cementitious compositions produced by the previously described methods.

Detailed Description of the Preferred Embodiments

As one skilled in the art would realize, the chemical analysis of various slags from either ferrous or non-ferrous or smelting operations as well as that of the fly ash or clinker which results from fossil fuel combustion, can vary, over a wide range. Average typical analyses for such materials are set forth in Table I. This table includes the major components of the slags, but a minor amount of additional components such as metal oxides, sulphides, ect. may also be present.

## TABLE I

### COMPOSITION OF TYPICAL SLAGS

| | Weight Percent | | | |
| | CaO | SiO$_2$ | Al$_2$O$_3$ | Fe$_2$O$_3$ |
| --- | --- | --- | --- | --- |
| Nickel Reverberatory Slag | 2-10 | 32-36 | 2-10 | 44-56 |
| Copper Reverberatory Slag | 1-8 | 33-40 | 2-10 | 47-50 |
| Iron Blast Furnace Slag | 35-50 | 28-38 | 10-20 | 3-5 |
| Non-Ferrous Blast Furnace Slag | 15-20 | 32-38 | 2-10 | 30-40 |
| Fossil Fuel Combustion Residue (Fly Ash) | 2-15 | 38-67 | 15-38 | 3-13 |

The present invention relates to a composition and a method for obtaining useful cementitious products comprised of such waste residues by adjusting and balancing various important components to control the cementitious reactions in the final compositions. As shown in Table I, non-ferrous slags typically have relatively low calcium oxide and alumina contents. Such amounts of calcium oxide and alumina are often insufficient to provide for the required calcium sulpho-aluminate and calcium silicate reactions and thus, such slags are not suitable for use on their own as cements unless their chemistry is appropriately modified.

A minimum amount of about 8% CaO and about 3 1/2 - 4% of Al$_2$O$_3$ is required to be present (in a preferred ratio of approximately 2:1 CaO:Al$_2$O$_3$) whithin the waste material utilized to form the cementitious composition of the present invention. These levels are necessary in order to provide a starting material whose alumina component may be activated upon the subsequent addition of a composition containing additional Ca(OH)$_2$ or CaO to react with a sulfate-containing composition and form a cementitious material capable of providing a high early strength.

Such a modification of the calcium oxide content can be carried out using a variety of methods. During the formation of slag in a furnace, additional lime or limestone may be added during the smelting process, with a corresponding increase in the final calcium oxide content of the slag. Similarly, a modification of the aluminiun oxide content can be achieved by the addition of, for example, fly ash, during the smelting process.

Once a slag of the correct composition has been made and granulated to a high glass content, it must be ground, together with the gypsum if necessary, to a predetermine fineness, preferably between about 2,500 and 5,000 Blaine.

Thus, the addition of water and an alkaline material, preferably lime, serves to activate this composition. Differentiation is necessary, however, between lime used as an activator and lime added to the furnace feed to increase the CaO content of the slag, this being the lime which subsequently plays a major role in the cementitious reactions. It is necessary that this CaO be incorporated into the amorphous structure of the slag to enhance its disordered chemical state and increase its reactivity.

The alkaline material, added in order to activate the mixture, adjusts the pH upwardly to about twelve and allows the formation of gels and AlO$_2$ ions. Unless gypsum (CaSO$_4$·2H$_2$O) or some other sulphate ion containing materials are added, however, the alumina component remains unreactive. In order for the cementitious compound to be successful, its alumina component chemistry must approach that of the compound Ettringite, a calcium monosulpho-aluminate compound with the approximate formula Ca$_6$Al$_2$(SO$_4$)$_3$(OH)$_{12}$.26H$_2$O. The traditional 'pozzolonic' slag-lime-water system is generally deficient in sulphate radical and unless this is added from some extraneous source, the desired cementitious reactions will not occur. It is possible that in certain ores, the sulphate radical may exist in the mill tailings in a form in which it would be available for the cementitious reactions but for most cases, additional sulphate ions must be added to the slag. Thus, it is critical to adjust the sulphate content to a range which, when combined with the other ingredients. provides the approximate stoichiometric ratio found in the mineral ettringite. The sulphate anion can be added as either gypsum or sodium sulphate or other.

The pH of the mix may be raised to the required alkaline value by addition of an alkali metal hyroxide or other base, or by the addition of alkaline materials such as sodium carbonate, sodium bicarbonate or potash, provide they are accompanied by the addition of free lime.

By adjusting all of these components within the parameters stated above, a cementitious composition is formed, having a portion which forms ettringite-like structures, thus obtaining sufficient strength and stability in the final cementitious product.

With respect to ferrous slags, a similar procedure could be followed. Such slags, however, usually contain a much higher calcium oxide and alumina content than non-ferrous slags and their compositions would not need adjusting. The other steps described above would be followed in an essentially identical fashion to those for non-ferrous slags in order to achieve the desired cementitious compositions. Fly ash or other fossil fuel combustion residue would be treated in the same manner as ferrous slags.

As would be clearly understandable to one skilled in the art, the cementitious compositions of the present invention may be used alone, or they may be mixed with a wide variety of fillers, aggregate, accelerators, retarders or other additives. Also, such cementitious compositions can be substituted for all or a portion of the Portland cement component of ordinary cementitious compositions or concrete. Such cements can also be mixed with high aluninous cements, pozzolans or other materials to form specialty cements for specific applications.

While it is apparent that the invention disclosed herein is calculated to provide an improved cementitious system over those described in the prior art, it will be appreciated that alternate embodiments may be devised by those skilled in the art. It is therefore intended that the appended claims cover all modifications or embodiments as fall within the true spirit ans scope of the present invention.

## Claims

1. A method for making a cementitious composition which comprises :

adding to a waste residue of a non-ferrous slag, a fossil fuel combustion residue, or a mixture thereof during its formation in a furnace or burner a compound containing $CaO$ and a compound containing $Al_2O_3$ to form a first mixture having a sufficient $CaO$ and $Al_2O_3$ content to enable said first mixture to react with a composition comprising a sulphate anion, added thereto during a subsequent treatment step, to form a composition having pozzolanic qualities attainable with ettringite;

increasing the pH of the first mixture to a sufficiently alkaline value to activate the alumina component of said first mixture;

treating said first mixture by the addition thereto of a compound containing a sulphate anion and an amount of water sufficient to hydrate said treated mixture so as to form a second mixture, the proportional relationship among the $CaO$, $Al_2O_3$ and sulphate components in said second mixture being such that the ratio thereamong sufficiently approaches the stoichiometric relation of the components of the mineral ettringite so as to form a high-grade pozzolanic material therefrom; and

allowing said second mixture to cure so as to form a cementitious composition.

2. The method of claim 1 wherein said first mixture comprises at least about 8% of said $CaO$ and at least about 3.5% of said $Al_2O_3$.

3. The method of claim 2 wherein the ratio of said $CaO$ to said $Al_2O_3$ is about 2:1.

4. The method of any of claims 1, 2 or 3 wherein the pH of said first mixture is adjusted to between about 10 and 14 by addition of an alkaline compound in order to activate the alumina component of said first mixture and provide said first mixture with a high early strength.

5. The method of any of claims 1, 2 or 3 wherein additional $CaO$ is added to said furnace or said burner during the formation of the waste residue.

6. The method of any of claims 1, 2 or 3 wherein additional $CaO$ is added to said slag after said slag is ground.

7. The method of any of claims 1, 2 or 3 wherein said compound containing $CaO$ is lime.

8. The method of any of claims 1, 2 or 3 wherein said compound containing a sulphate anion is an alkali metal sulphate or gypsum.

9. The method of any of claims 1, 2 or 3 which further comprises grinding said first mixture to a particle size of between about 2,500 and 5,000 Blaine, prior to increasing the pH thereof.

10. The method of any of claims 1, 2 or 3 which further comprises adding an amount of Portland cement to the first mixture sufficient to impart additional strength to the cementitious composition formed therefrom.

11. The method of any of claims 1, 2 or 3 which further comprises adding aggregate, fillers, tailings, or mixtures thereof to said first mixture prior to adding said water thereto.

12. The method of any of claims 1, 2 or 3 which further comprises curing the second mixture to obtain a cementitious composition having increased strength obtainable within the shortest curing time.

## Patentansprüche

1. Verfahren zur Herstellung einer Zementverbindung, welches folgendes umfasst:

Zusatz eines Gemisches zu einem Abfallrückstand einer nicht-eisenhaltigen Schlacke, einem fossilen Verbrennungsrückstand oder einer Mischung derselben während der Entstehung in einer Feuerungsanlage oder einem Brenner, wobei besagtes Gemisch CaO und ein Gemisch aus $Al_2O_3$ zur Bildung einer ersten Mischung enthält, die genügend CaO und $Al_2O_3$ aufweist, damit die erste Mischung mit einer ein Sulfatanion enthaltenden Verbindung reagieren kann, das während eines späteren Behandlungsschrittes zwecks Bildung einer Verbindung zugefügt wird, die mit Ettringit erzielbare Eigenschaften eines Gipsschlackenzements aufweist;

Erhöhung des pH-Wertes der ersten Mischung bis zu einem zur Aktivierung der Tonerdekomponente der besagten ersten Mischung ausreichenden alkalischen Wert;

Bearbeitung der besagten ersten Mischung mittels Zusatz eines Gemisches, das ein Sulfatanion und Wasser enthält, ausreichend zur Hydratisierung von besagtem behandelten Gemisch, sodass es eine zweite Mischung bildet, wobei das anteilmässige Verhältnis zwischen CaO, $Al_2O_3$ und Sulfatkomponenten in besagter zweiter Mischung so ist, dass die Proportion dem stöchiometrischen Verhältnis der Komponenten des mineralen Ettringit ausreichend nahekommt, sodass daraus ein hochgradiges Gipsschlackenzementmaterial gebildet wird; und

Ermöglichung der Aushärtung der besagten zweiten Mischung zur Bildung einer Zementverbindung.

2. Verfahren nach Anspruch 1, worin besagte erste Mischung mindestens ca. 8% des besagten CaO und mindestens ca. 3,5% des besagten $Al_2O_3$ umfasst.

3. Verfahren nach Anspruch 2, worin das Verhältnis von besagtem CaO zu besagtem $Al_2O_3$ etwa 2:1 beträgt.

4. Verfahren nach jedem der Ansprüche 1,2 oder 3, worin der pH-Wert von besagter erster Mischung auf zwischen ca. 10 und 14 durch Zusatz eines Alkaligemischs eingestellt wird, um die Tonerdekomponente besagter erster Mischung zu aktivieren und die besagte erste Mischung mit einer hohen frühzeitigen Festigkeit auszustatten.

5. Verfahren nach jedem der Ansprüche 1,2 oder 3, worin zusätzliches CaO besagter Feuerungsanlage oder besagtem Brenner während der Bildung des Abfallrückstandes zugesetzt wird.

6. Verfahren nach jedem der Ansprüche 1,2 oder 3, worin der Schlacke, nachdem sie gemahlen wurde, weiteres CaO zugesetzt wird.

7. Verfahren nach jedem der Ansprüche 1,2 oder 3, worin besagtes Gemisch, das CaO enthält, Kalk ist.

8. Verfahren nach jedem der Ansprüche 1,2 oder 3, worin besagtes, ein Sulfatanion enthaltendes Gemisch ein Alkalimetallsulfat oder Gips ist.

9. Verfahren nach jedem der Ansprüche 1,2 oder 3, das darüber hinaus das Mahlen besagter ersten Mischung zu einer Partikelgrösse von zwischen 2,500 und 5,000 Blaine vor der Erhöhung des diesbezüglichen pH-Wertes umfasst.

10. Verfahren nach jedem der Ansprüche 1,2 oder 3, das darüber hinaus den Zusatz einer Menge Portland-Zement zu der ersten Mischung umfasst, die ausreichend ist, um der daraus geschaffenen Zementverbindung zusätzliche Festigkeit zu verleihen.

11. Verfahren nach jedem der Ansprüche 1,2 oder 3, das darüber hinaus den Zusatz von Zuschlagstoffen, Füllstoffen, Abfällen oder Mischungen daraus zu besagter ersten Mischung, vor dem Zusatz von besagtem Wasser, umfasst.

12. Verfahren nach jedem der Ansprüche 1,2 oder 3, das darüber hinaus die Aushärtung der zweiten Mischung zwecks Erreichung einer Zementverbindung umfasst, die erhöhte Festigkeit besitzt, welche innerhalb der kürzesten Aushärtungszeit erreichbar ist.

## Revendications

1. Procédé pour fabriquer une composition cimentaire, qui comprend :

l'addition, à un déchet formé d'un résidu de laitier non ferreux, un résidu de combustion d'un combustible fossile, ou un de leurs mélanges pendant sa formation dans un four ou un brûleur, d'un composé contenant CaO et d'un composé contenant Al$_2$O$_3$ pour former un premier mélange ayant une teneur en CaO et Al$_2$O$_3$ suffisante pour permettre à ce premier mélange de réagir avec une composition comprenant un anion sulfate, qui y est ajouté au cours d'une étape subséquente de traitement, pour former une composition ayant des qualités pouzzolaniques pouvant être obtenues à l'aide d'ettringite ;

l'élévation du pH du premier mélange, pour le porter à une valeur suffisamment alcaline pour activer le composant alumine dudit premier mélange ;

le traitement de ce premier mélange, par addition à ce mélange d'un composé contenant un anion sulfate et une quantité d'eau suffisante pour hydrater ledit mélange traité afin de former un second mélange, la relation de proportionnalité entre les composants CaO, Al$_2$O$_3$ et sulfate dans ledit second mélange étant telle que leur rapport se rapproche suffisamment de la relation stoechiométrique des composants de l'ettringite minérale de manière à former à partir du mélange une matière pouzzolanique de haute qualité ; et

le repos du second mélange pour lui permettre de faire prise et de durcir afin de former une composition cimentaire.

2. Procédé selon la revendication 1, dans lequel ledit premier mélange comprend au moins environ 8 % dudit CaO et au moins environ 3,5 % dudit Al$_2$O$_3$.

3. Procédé selon la revendication 2, dans lequel le rapport dudit CaO audit Al$_2$O$_3$ est égal à environ 2:1.

4. Procédé selon l'une quelconque des revendications 1, 2 ou 3, dans lequel on ajuste le pH dudit premier mélange à une valeur comprise entre environ 10 et 14, par addition d'un composé alcalin afin d'activer le composant alumine dudit premier mélange et conférer à cedit premier mélange une résistance mécanique précoce élevée.

5. Procédé selon l'une quelconque des revendications 1, 2 ou 3, dans lequel on ajoute un supplément de CaO dans ledit four ou ledit brûleur, pendant la formation du résidu constituant un déchet.

6. Procédé selon l'une quelconque des revendications 1, 2 ou 3, dans lequel on ajoute un supplément de CaO audit laitier après broyage dudit laitier.

7. Procédé selon l'une quelconque des revendications 1, 2 ou 3, dans lequel ledit composé contenant CaO est de chaux.

8. Procédé selon l'une quelconque des revendications 1, 2 ou 3, dans lequel ledit composé contenant un anion sulfate est un sulfate de métal alcalin ou du gypse.

9. Procédé selon l'une quelconque des revendications 1, 2 ou 3, qui comprend en outre le broyage dudit premier mélange jusqu'à obtenir une taille particulaire comprise entre environ 2 500 et 5 000 Blaine, avant d'en élever le pH.

10. Procédé selon l'une quelconque des revendications 1, 2 ou 3, qui comprend en outre l'addition, au premier mélange, d'une quantité de ciment Portland suffisante pour conférer un supplément de résistance mécanique à la composition cimentaire formée à partir de ce mélange.

11. Procédé selon l'une quelconque des revendications 1, 2 ou 3, qui comprend en outre l'addition d'un agrégat, de charges, de déchets de minerai ou de leurs mélanges, audit premier mélange, avant d'y ajouter ladite eau.

12. Procédé selon l'une quelconque des revendications 1, 2 ou 3, qui comprend en outre la maturation de prise ou de durcissement du second mélange afin d'obtenir une composition cimentaire ayant une résistance mécanique accrue pouvant être obtenue en le temps le plus bref de prise.